# EUROPÄISCHE PATENTSCHRIFT

(11) **EP 0 811 515 B1**
(45) Veröffentlichungstag und Bekanntmachung des Hinweises auf die Patenterteilung: **16.08.2001**
(21) Anmeldenummer: 97109137.6
(22) Anmeldetag: 05.06.1997
(51) Int. Cl.: B60H 1/34

(54) **Belüftungsdüse**
Air vent
Buse d'aération

(30) Priorität: 07.06.1996 DE 19622908
(43) Veröffentlichungstag der Anmeldung: 10.12.1997
(73) Patentinhaber: AURORA Konrad G. Schulz GmbH & Co, 69427 Mudau (DE)
(72) Erfinder: Gruner, Roland, 74864 Robern (DE)
(74) Vertreter: Baronetzky, Klaus, Dipl.-Ing.

(56) Entgegenhaltungen:
- EP-A- 0 457 063
- GB-A- 1 296 921
- GB-A- 1 452 270

## Beschreibung

Die Erfindung betrifft eine Belüftungsdüse mit Umlenkelement für den aus der Düse austretenden Luftstrom mit einem einen Lufteintritt aufweisenden Gehäuse mit in dem Luftstrom auf parallelen Achsen verschwenkbaren Klappen.

Aus der EP-A-457 063 ist eine Belüftungsdüse bekannt, bei der miteinander außerhalb des Luftstroms kämmende Zahnsegmente vorgesehen sind, über die Klappen verschwenkt werden.

Eine der Klappen weist ein weiteres Zahnsegment auf, das mit einem Ritzel des Stellorgans kämmt. Auf einer Seite der Belüftungseinrichtung ist das Getriebe zwischen den beiden Klappen und auf der anderen Seite das Getriebe zwischen dem Stellorgan und einer Klappe gelagert und angeordnet. Gemäß Spalte 2, Zeilen 41 bis 50 soll je nur eine Verzahnung an dem je freien Endbereich vorgesehen sein, und es ist erwünscht, hiermit eine besonders feinfühlige Betätigung zu bewirken.

Im Rahmen der Erfindung vorgenommene Untersuchungen haben jedoch ergeben, daß in der Praxis diese Lösung eher Nachteile mit sich bringt. Insbesondere ist ein gewisses Spiel des Getriebes erforderlich, allein schon, um im Rahmen des vorgegebenen Temperaturbereichs ein klemmfreies Betätigen zu ermöglichen. Ein weiteres Problem derartiger Klappen besteht darin, daß sie an ihren Lagerstellen aufgrund der intensiven Luftströmung dazu neigen, Staub und andere Verunreinigungen zu sammeln. Hierdurch entsteht im Laufe der Zeit automatisch eine gewisse Schwergängigkeit bei der Betätigung der Klappen, wobei beobachtet wurde, daß die Klappen sich trotz vollständiger Betätigung des Stellorgans nicht mehr vollständig schließen lassen.

Gerade, wenn die Klappen an der betreffenden Stelle das einzige Steuerorgan für die Luftströmung sind, wird ein derartiges unvollständiges Schließen aber als unangenehm empfunden, gerade, wenn das Fahrzeug auch in kalten Regionen eingesetzt wird und es sich um Frischluftdüsen handelt, die dann beispielsweise den Fahrer des Fahrzeugs stets anblasen.

Zwar kann der Fahrer sich beispielsweise damit behelfen, daß er einen geeigneten Gegenstand vor der Düse anbringt, um so den Mangel des vollständigen Schließens auszugleichen. Dies stellt jedoch nur eine Notlösung dar und wird in vielen Fällen als unbefriedigend empfunden.

Bei Belüftungsdüsen mit einem oder mehreren Umlenkelementen für den aus der Düse austretenden Luftstrom ist es bekannt, stromauf vor dem bzw. den Umlenkelementen eine Absperrvorrichtung für den Luftstrom vorzusehen. Diese besteht im allgemeinen aus einer einzigen drehbaren Klappe, die im Zentrum der Strömung gelagert ist und nicht nur eine erhebliche Bauhöhe erfordert, sondern gerade im Kernbereich der Strömung eine erhebliche Verwirbelung bewirkt, die sich im Bereich der Umlenkelemente insofern nachteilig auswirkt, als die gleichmäßige Ausbildung eines Luftfächers von großer Wurfweite und die gleichmäßige Beaufschlagung von ständig größer ausgebildeten Windschutzscheiben, beispielsweise bei Omnibussen, aber auch Arbeitsmaschinen, wie Traktoren, Baukrankabinen etc., beeinträchtigt werden.

Ferner ist bekannt, als Absperrichtung zwei in dem Luftstrom auf parallelen Achsen verschwenkbare Klappen vorzusehen, wobei diese bei bekannten Anordnungen jedoch durch Laschen und Lenker gekoppelt sind, die ebenfalls gerade im Kernbereich der Strömung zu unerwünschten Verwirbelungen führen. Außerdem ist der Montageaufwand für derartige Anordnungen erheblich und bei höheren Strömungsgeschwindigkeiten können sich Vibrationen und Geräuschbeeinträchtigungen ergeben.

Der Erfindung liegt deshalb die Aufgabe zugrunde, eine Belüftungsdüse mit einer Absperrvorrichtung zu schaffen, die eine Anordnung und Verstellbarkeit der Klappen innerhalb des Gehäuses ermöglicht, ohne daß insbesondere die Kernströmung beeinträchtigt wird.

Erfindungsgemäß wird diese Aufgabe dadurch gelöst, daß die Klappen über miteinander kämmende, außerhalb des Luftstroms angeordnete Zahnsegmente gekoppelt sind und einer der Klappen ein Drehantrieb zugeordnet ist.

Dadurch wird der Vorteil erreicht, daß sich bei voll geöffneter Absperrvorrichtung mindestens innerhalb der Kernströmung kein Widerstand, beispielsweise in Form einer Klappe, eines Lenkers, Laschen od. dgl. befindet. Trotzdem ist es möglich, die Absperrvorrichtung vollständig zu schließen und jede beliebige Zwischenstellung wählen zu können, wobei stets die laminare von Verwirbelungen freie Kernströmung sichergestellt ist. Bei voll geöffneter Absperrvorrichtung ergibt sich der weitere Vorteil, daß drei Luftströme auf die Umlenkelemente treffen, deren Geschwindigkeitsprofil im wesentlichen konstant ist, so daß sich die Wirkung der Umlenkelemente entsprechend ihrer Auslegung frei entfaltet, obgleich sie mit einer Absperrvorrichtung kombiniert sind.

Die Absperrvorrichtung hat eine geringe Bauhöhe. Eine etwaige Drehbarkeit der Umlenkelemente wird dadurch nicht beeinträchtigt. Der Platzbedarf im Armaturenbrett ist gering, was auch vorteilhafterweise dadurch erreicht wird, daß die Zahnsegmente an Stellgliedern ausgebildet sind, die in in dem Gehäuse angeordneten Lagerbuchsen für die Klappen drehbar sind.

Eine Wirbelbildung, beispielsweise auch durch Grenzschichtablösung, wird im Bereich der Absperrvorrichtung dadurch reduziert, daß die Absperrklappen plan ausgebildet und ihre Achse jeweils voll intregriert ist. Die Klappen weisen Lagerteller auf, die an den Stirnseiten der Lagerbuchsen anliegen und Führungselemente aufweisen, die mit den Lagerbuchsen in Eingriff stehen. Auf diese Weise wird gleichzeitig eine Abdichtung an den Seiten der Klappen erreicht.

Der Drehantrieb zum Verstellen der Klappen von außen weist ein Stellorgan auf, das mit einem der Stellglieder gekoppelt ist. Vorteilhafterweise ist das Stellorgan an dem Gehäuse drehbar gelagert und weist ein Zahnsegment auf, das mit einem weiteren Zahnsegment in Eingriff steht, das koaxial zu dem Zahnrad an dem Stellglied angeordnet ist, dem der Drehantrieb zugeordnet ist.

An der Luftaustrittsseite des Gehäuses ist zweckmäßigerweise ein Rahmen angeordnet, der rechteckig ausgebildet sein kann und die Befestigungselemente für die Belüftungsdüse aufweist. Innerhalb des Rahmens kann ein Lagerring für verschwenkbare Luftumlenkklappen vorgesehen sein.

In der Zeichnung ist ein Ausführungsbeispiel der Erfindung wiedergegeben, das anhand der nachfolgenden Beschreibung näher erläutert wird. Es zeigen:
- Fig. 1: einen Längsschnitt durch die Belüftungsdüse mit geöffneten Klappen,
- Fig. 2: eine schematische Seitenansicht der Belüftungsdüse mit geschlossenen Klappen,
- Fig. 3: einen Schnitt etwa gemäß Linie III-III in Fig. 1 und
- Fig. 4: eine Draufsicht der Belüftungsdüse.

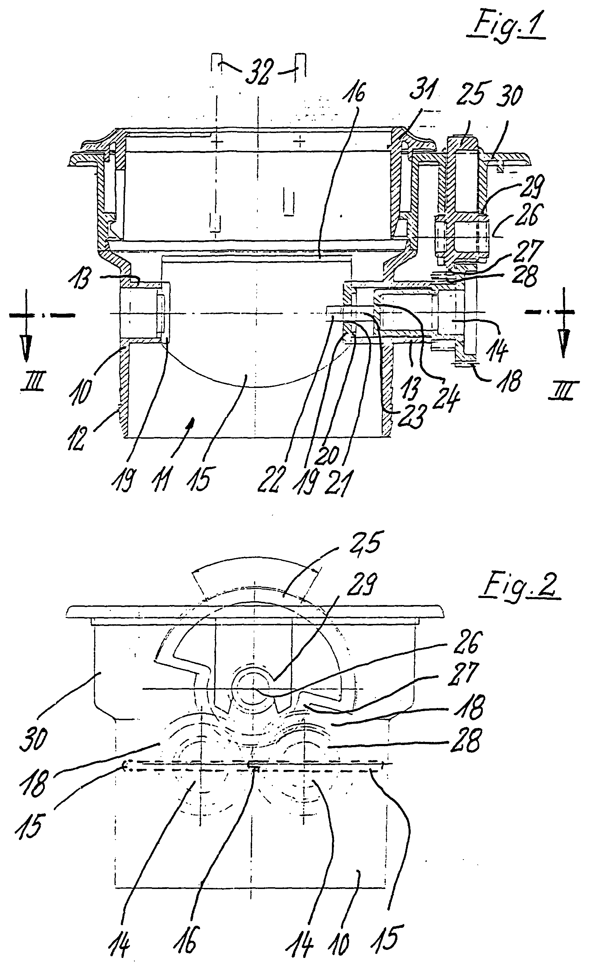

Gemäß Fig. 1 weist ein Gehäuse 10 einen Lufteintritt 11 auf, dessen nach außen weisende Oberfläche mit Anschlußelementen 12 für einen Schlauch od. dgl. zur Zuführung von Luft, einschließlich erwärmter, klimatisierter oder gereinigter Luft, ausgebildet ist.

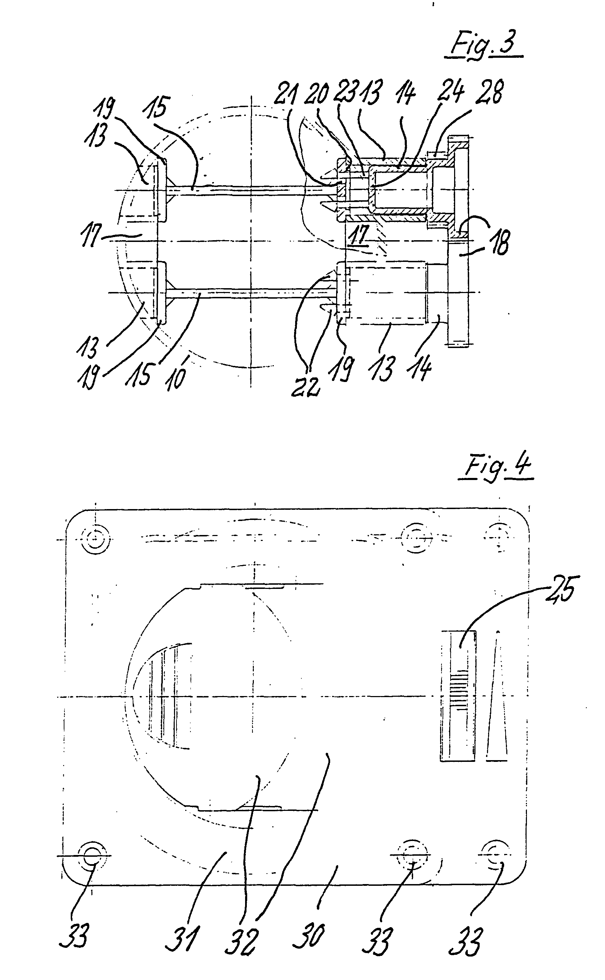

Das zylindrische Gehäuse 10 weist gemäß Fig. 3 insgesamt 4 Lagerbuchsen 13 auf, in denen Stellglieder 14 für Klappen 15 geführt sind, die die Absperrvorrichtung bilden und im geschlossenen Zustand den gesamten Querschnitt des Gehäuses 11 verschließen. Die Absperrwirkung wird dadurch verbessert, daß an den sich gegenüberliegenden freien Enden der Klappen 15 Absätze 16 vorgesehen sind, die im geschlossenen Zustand ineinandergreifen. Zwischen zwei benachbarten Lagerbuchsen 13 können Rippen 17 ausgebildet sein, die ein Umströmen der Klappen 15 im geschlossenen Zustand unterbinden.

An jedem Stellglied 14 ist ein Zahnsegment 18 angeordnet, wobei die beiden Zahnsegmente 18 miteinander kämmen und als ganze Zahnräder ausgebildet sein können. Die Stellglieder 14 sind mit den Zahnsegmenten 18 zweckmäßigerweise als einstückige Kunststoffteile ausgebildet.

Die Klappen 15 haben plan parallele Oberflächen, und die Achsen der Klappen sind in diese integriert, ohne daß sich im Bereich der Achsen Vorsprünge ergeben. Die Klappen 15 weisen an ihren Stirnseiten koaxiale Lagerteller 19 auf, die an den Stirnseiten der Lagerbuchsen 13 anliegen und mit Führungselementen 20 jeweils mit einem Bund in die Lagerbuchsen 13 eingreifen.

Die Lagerteller 19 haben Durchbrechungen 21, durch die Anschlußelemente 22 greifen, die an den freien Enden von Armen 23 ausgebildet sind, die federnd nachgiebig an einem Deckel 24 eines jeden Stellglieds 14 angeordnet ist, der in den Innenraum des Gehäuses 10 weist und diesen im Bereich der Stellglieder abschließt.

Die Zahnsegmente 18 sind als vollständige Zahnräder ausgebildet, die außerhalb des Gehäuses 10 miteinander kämmen.

Der Drehantrieb weist ein von Hand zu betätigendes Stellorgan 25 auf, das um eine Achse 26 schwenkbar gelagert ist. Das Stellorgan 25 hat ein Zahnsegment 27, das mit einem weiteren Zahnsegment 28 in Eingriff steht, das koaxial zu dem Zahnrad 18 an dem Stellglied 14 angeordnet ist, dem der Drehantrieb zugeordnet ist.

An der Luftaustrittsseite des Gehäuses 10 ist ein Rahmen 30 angeordnet, in dem bei dem dargestellten Ausführungsbeispiel ein Lagerring 31 drehbar gelagert ist, der in bekannter Weise schwenkbare Umlenkklappen 32 aufweist, die den aus der Lüftungsdüse austretenden Luftstrom gleichmäßig bzw. fächerförmig in vorbestimmter Weise über die zu beaufschlagende Glasfläche verteilen. An dem Rahmen 30 ist ein Lager 29 für das Stellorgan 25 ausgebildet.

Der Rahmen 30 kann zweckmäßigerweise in Draufsicht rechteckförmig sein und an den Ecken Befestigungselemente, wie Durchgangsbohrungen 33, zur Befestigung der Belüftungsdüse an einem Armaturenbrett od. dgl. aufweisen.

Das unmittelbar neben dem Lagerring 31 zum Verstellen der Umlenkklappen 32 angeordnete Stellorgan 25 gestattet es, den Luftstrom feinfühlig zu regulieren und mittels des Lagerrings 31 und der Umlenkklappen 32 auszurichten.

## Patentansprüche

1. Belüftungsdüse mit Umlenkelement für den aus der Düse austretenden Luftstrom mit einem einen Lufteintritt aufweisenden Gehäuse, mit in dem Luftstrom auf parallelen Achsen verschwenkbaren Klappen, wobei die Klappen (15) über miteinander kämmende, außerhalb des Luftstroms angeordnete Zahnsegmente (18) gekoppelt sind und einer der Klappen (15) ein Drehantrieb (25, 27) zugeordnet ist, dadurch gekennzeichnet, daß eine der Klappen (15) ein weiteres Zahnsegment (28) aufweist, das auf der gleichen Seite außerhalb des Luftstroms wie das andere Zahnsegment (18) angeordnet ist und mit einem Zahnsegment (27) des Stellorgans kämmt.

2. Düse nach Anspruch 1, dadurch gekennzeichnet, daß die Zahnsegmente (18) an Stellgliedern (14) ausgebildet sind, die in in dem Gehäuse (10) angeordneten Lagerbuchsen (13) für die Klappen (15) drehbar sind.

3. Düse nach Anspruch 2, dadurch gekennzeichnet, daß die plan ausgebildeten Klappen (15) mit der jeweils voll integrierten Achse Lagerteller (19) aufweisen, die an den Stirnseiten der Lagerbuchsen (13) anliegen und Führungselemente (20) aufweisen, die mit den Lagerbuchsen (13) in Eingriff stehen.

4. Düse nach Anspruch 3, dadurch gekennzeichnet, daß die Führungselemente (20) jeweils einen Bund aufweisen, der in die zugeordnete Lagerbuchse (13) greift.

5. Düse nach mindestens einem der Ansprüche 1 bis 4, dadurch gekennzeichnet, daß die Stellglieder (14) an den in den Gehäuseinnenraum weisenden Enden Anschlußelemente (22) aufweisen, die mit den Lagertellern (19) in Verbindung stehen.

6. Düse nach einem der Ansprüche 1 bis 5, dadurch gekennzeichnet, daß die Segmente (18) als Zahnräder ausgebildet sind, die miteinander kämmen.

7. Düse nach einem der Ansprüche 1 bis 6, dadurch gekennzeichnet, daß der Drehantrieb (25, 27) ein Stellorgan (25) aufweist, das mit einem der Stellglieder (14) gekoppelt ist.

8. Düse nach einem der Ansprüche 1 bis 7, dadurch gekennzeichnet, daß das Stellorgan (25) an dem Gehäuse drehbar angeordnet und mit einem Zahnsegment (27) versehen ist, das mit einem weiteren Zahnsegment (28) in Eingriff steht, das koaxial zu dem Zahnrad (18) an dem Stellglied (14) angeordnet ist, dem der Drehantrieb (25, 27) zugeordnet ist.

9. Düse nach einem der Ansprüche 1 bis 8, dadurch gekennzeichnet, daß an der Luftaustrittsseite des Gehäuses (10) ein Rahmen (30) angeordnet ist, in dem ein Lagerring (31) für verschwenkbare Umlenkklappen (32) drehbar ist.

10. Düse nach einem der Ansprüche 1 bis 9, dadurch gekennzeichnet, daß der Rahmen (30) ein Lager (29) für das Stellorgan (25) aufweist.

11. Düse nach einem der Ansprüche 1 bis 10, dadurch gekennzeichnet, daß der Rahmen (30) rechteckig ausgebildet ist und Befestigungselemente (33) für die Belüftungsdüse aufweist.

## Claims

1. Ventilation-nozzle with a deviation element for the airflow exiting from the nozzle having a casing with one air inlet, with pivotable flaps on parallel axes in the airflow, where the flaps (15) are coupled via toothed segments which comb together, arranged outside the airflow (18) and a rotating drive (25, 27) is assigned to one of the flaps (15), characterised in that one of the flaps (15) has another toothed segment (28) that is arranged on the same side outside the airflow like the other toothed segment (18) and combs with a toothed segment (27) of the control unit.

2. Nozzle according to claim 1, characterised in that the toothed segments (18) are formed on control elements (14), which are rotatable in bearing bushes (13) arranged in the casing (10) for the flaps (15).

3. Nozzle according to claim 2, characterised in that the flatly disposed flaps (15) comprise bearing plates (19) with the in each case fully integrated axis, that lie on the front side of the bearing bushes (13) and have guide elements (20) which engage with the bearing bushes (13).

4. Nozzle according to claim 3, characterised in that the guide elements (20) each have a collar that grips into the assigned bearing bush (13).

5. Nozzle according to at least one of claims 1 to 4, characterised in that the control elements (14) comprise connection elements (22) that are in connection with the bearing plates (19) at the ends pointing into the interior of the casing.

6. Nozzle according to one of the claims 1 to 5, characterised in that the segments (18) are formed as cogs that comb together.

7. Nozzle according to one of the claims 1 to 6, characterised in that that the rotating drive (25, 27) comprises a control unit (25), that is connected with one of the control elements (14).

8. Nozzle according to one of the claims 1 to 7, characterised in that the control unit (25) is arranged on the casing orientably and has a toothed segment (27) that engages into another toothed segment (28) that is coaxial to the gear (18) on the control element (14), to which the rotating drive (25, 27) is assigned.

9. Nozzle according to one of the claims 1 to 8, characterised in that a frame (30) is arranged at the air-exit-side of the casing (10), in which a bearing ring (31) for pivotable deviation flaps (32) is rotatable.

10. Nozzle according to one of the claims 1 to 9, characterised in that the frame (30) comprises a bearing (29) for the control unit (25).

11. Nozzle according to one of the claims 1 to 10, characterised in that the frame (30) is formed as a rectangle and has anchoring-elements (33) for the ventilation-nozzle.

## Revendications

1. Buse de ventilation avec élément de déviation pour l'écoulement de l'air sortant de la buse qui présente un boîtier avec une entrée d'air, avec des clapets pivotables sur des axes parallèles dans l'écoulement d'air où les clapets (15) sont accouplés par des segments dentés qui se peignent ensemble, arrangés à l'extérieur de l'écoulement d'air (18) et un entraînement tournant (25, 27) est assigné à l'un des clapets (15), caractérisée en ce que l'un des clapets (15) présente un autre segment denté (28) qui comme l'autre segment denté (18) est disposé du même côté à l'extérieur de l'écoulement d'air et peigne avec un segment denté (27) du centre de contrôle.

2. Buse d'après la revendication 1, caractérisée en ce que les segments dentés (18) soient formés sur les éléments de contrôle (14), qui sont orientables dans des coussinets (13) arrangés dans le boîtier (10) pour les clapets (15).

3. Buse d'après la revendication 2, caractérisée en ce que les clapets (15) disposés à plat présentent des plaques d'appui (19) avec chaque axe complètement intégré qui s'appuient sur le côté frontal du coussinet (13) et présentent des éléments de guide (20) qui s'engagent dans les coussinets (13).

4. Buse d'après la revendication 3, caractérisée en ce que les éléments de guide (20) présentent chacun un col qui saisit le coussinet assigné (13).

5. Buse d'après au moins une des revendications 1 à 4, caractérisée en ce que les éléments de contrôle (14) présentent des éléments de connexion (22) qui sont en connexion avec les plaques d'appui (19) aux extrémités dirigées dans l'intérieur du boîtier.

6. Buse d'après une des revendications 1 à 5, caractérisée en ce que les segments (18) soient formés comme dents qui se peignent ensemble.

7. Buse d'après une des revendications 1 à 6, caractérisée en ce que l'entraînement tournant (25, 27) comprenne un centre de contrôle (25), qui est accouplé à l'un des éléments de contrôle (14).

8. Buse d'après une des revendications 1 à 7, caractérisée en ce que le centre de contrôle (25) soit orientablement disposé sur le boîtier et présente un segment denté (27) qui s'engrène dans un autre segment denté (28) qui est disposé coaxial à la roue dentée (18) sur l'élément de contrôle (14) auquel l'entraînement tournant (25, 27) est assigné.

9. Buse d'après une des revendications 1 à 8, caractérisée en ce qu'un cadre (30) soit disposé sur le côté de sortie d'air du boîtier (10) dans lequel une bague de palier (31) pour clapets de déviation pivotables (32) est orientable.

10. Buse d'après une des revendications 1 à 9, caractérisée en ce que le cadre (30) comprenne un coussinet (29) pour le centre de contrôle (25).

11. Buse d'après une des revendications 1 à 10, caractérisée en ce que le cadre (30) soit formé comme un rectangle et présente des éléments d'ancrage (33) pour la buse de ventilation.
